# EUROPEAN PATENT APPLICATION

(11) **EP 4 793 683 A1**
(43) Date of publication of application: **19.08.2026**
(21) Application number: 26156854.7
(22) Date of filing: 06.02.2026
(51) Int. Cl.: G02B 7/02, G02B 7/14, G03B 17/14

(54) **UNIT AND OPTICAL DEVICE**

(30) Priority: 17.02.2025 JP 2025023604
(71) Applicant: Canon Kabushiki Kaisha, Tokyo, 146-8501 (JP)
(72) Inventor: KUBOYAMA, Shunsuke, Tokyo (JP)
(74) Representative: WESER & Kollegen Patentanwälte PartmbB

(57) **Abstract**

A unit (100) includes a first component (1) and a second component (2). One of the first component (1) and the second component (2) is movable with respect to the other. A first surface (101) of the first component (1) includes a first region (111), a second region (121), a third region (131), and a fourth region (141). The second region (121) is provided between the first region (111) and the third region (131), and the fourth region (141) is provided between the first region (111) and the second region (121). An arithmetic mean roughness (Ra3) of the third region (131) is smaller than an arithmetic mean roughness (Ra2) of the second region (121). An arithmetic mean roughness (Ra4) of the fourth region (141) is smaller than the arithmetic mean roughness (Ra2) and larger than an arithmetic mean roughness (Ra1) of the first region (111).

## Description

### TECHNICAL FIELD

The present disclosure relates to a unit and an optical device.

### BACKGROUND

Many of products such as optical devices are each constituted by a plurality of components. The plurality of components include a first component and a second component one of which is movable with respect to the other. A gap is provided between the first component and the second component such that one of the first component and the second component can move smoothly with respect to the other. To reduce friction between the first component and the second component and wear caused by the friction, a lubricant such as a grease or oil is provided between the first component and the second component. Japanese Utility Model Application Laid-Open No. 5-64811 discloses a configuration in which, in a lens barrel in which an operable member is pivotable about an optical axis with respect to a fixed member, a lubricant is applied between a surface of the operable member and a surface of the fixed member for smooth rotation.

### SUMMARY

However, there is a possibility that the lubricant leaks and spreads in the conventional configuration.

An aspect of the present disclosure provides a technique advantageous for suppressing leakage and spread of the lubricant.

The present disclosure in its first aspect provides a unit as specified in claim 1. Optional features are specified in claim 2 to 14.

The present disclosure in its second aspect provides an optical device as specified in claim 15.

According to the present disclosure, a technique advantageous for suppressing leakage and spread of a lubricant can be provided.

Features of the present disclosure will become apparent from the following description of embodiments with reference to the attached drawings. The following description of embodiments is described by way of example.

### BRIEF DESCRIPTION OF THE DRAWINGS

FIG. 1A is an explanatory diagram of a portion of a unit according to a first embodiment.
FIG. 1B is an explanatory diagram of a portion of the unit according to the first embodiment.
FIG. 2 is a section view of the unit according to the first embodiment.
FIG. 3 is an enlarged perspective view of a portion of the outer surface of a component according to the first embodiment.
FIG. 4A is an explanatory diagram of a concavo-convex structure according to the first embodiment.
FIG. 4B is an explanatory diagram of a concavo-convex structure according to a modification example of the first embodiment.
FIG. 4C is an explanatory diagram of a concavo-convex structure according to a modification example of the first embodiment.
FIG. 4D is an explanatory diagram of a concavo-convex structure according to a modification example of the first embodiment.
FIG. 4E is an explanatory diagram of a concavo-convex structure according to a modification example of the first embodiment.
FIG. 4F is an explanatory diagram of a concavo-convex structure according to a modification example of the first embodiment.
FIG. 5A is an explanatory diagram of a portion of a concavo-convex structure region and a portion of a smooth surface region according to the first embodiment.
FIG. 5B is an explanatory diagram of a portion of the concavo-convex structure region and a portion of the smooth surface region according to the first embodiment.
FIG. 6A is an explanatory diagram of a portion of the concavo-convex structure region and a portion of the smooth surface region according to the first embodiment.
FIG. 6B is an explanatory diagram of a portion of the concavo-convex structure region and a portion of the smooth surface region according to a modification example of the first embodiment.
FIG. 7 is a diagram illustrating a result of sealability of a lubricant in the case of changing the distance between two protrusions according to the first embodiment.
FIG. 8A is a section view of a portion of the concavo-convex structure region according to the first embodiment.
FIG. 8B is a section view of a portion of the concavo-convex structure region according to the first embodiment.
FIG. 9 is a diagram illustrating a result of the sealability of the lubricant in the case of changing the arithmetic mean roughness of the smooth surface region according to the first embodiment.
FIG. 10A is a section view of a portion of the concavo-convex structure region according to the first embodiment.
FIG. 10B is a section view of a portion of the concavo-convex structure region according to the first embodiment.
FIG. 11 is an enlarged perspective view of a portion of the outer surface of a component according to a second embodiment.
FIG. 12 is an enlarged perspective view of a portion of the outer surface of a component according to a comparative example.
FIG. 13A is an enlarged perspective view of a portion of the outer surface of a component according to a third embodiment.
FIG. 13B is an enlarged plan view of a portion of the outer surface of the component according to the third embodiment.
FIG. 14A is a diagram schematically illustrating a step of injection molding for manufacturing a resin molded product according to the third embodiment.
FIG. 14B is a diagram schematically illustrating a step of injection molding for manufacturing the resin molded product according to the third embodiment.
FIG. 14C is a diagram schematically illustrating a step of injection molding for manufacturing the resin molded product according to the third embodiment.
FIG. 14D is a diagram schematically illustrating a step of injection molding for manufacturing the resin molded product according to the third embodiment.
FIG. 14E is a diagram schematically illustrating a step of injection molding for manufacturing the resin molded product according to the third embodiment.
FIG. 15A is a photograph picturing a portion of the surface of a mold according to the third embodiment observed with an electron microscope.
FIG. 15B is a photograph picturing the concavo-convex structure region of the component according to the third embodiment observed with an electron microscope.
FIG. 16A is a schematic perspective view of a laser processing machine according to the third embodiment.
FIG. 16B is an enlarged view illustrating processing performed on the surface of a parent material by the laser processing machine according to the third embodiment.
FIG. 17 is a schematic perspective view of an image pickup apparatus according to a fourth embodiment.
FIG. 18A is a perspective view of a unit that is a portion of a lens barrel according to the fourth embodiment.
FIG. 18B is a perspective view of a component according to the fourth embodiment.
FIG. 19 is an enlarged perspective view of the component according to the fourth embodiment.
FIG. 20 is a schematic perspective view of a portion of a component according to an example.

### DESCRIPTION OF THE EMBODIMENTS

Embodiments of the present disclosure will be described in detail with reference to drawings. For example, details of the embodiments described below can be appropriately modified for implementation by ones skilled in art within the gist of the present disclosure.

To be noted, in the drawings referred to in the description of the embodiments below, it is assumed that elements denoted by the same reference numerals have substantially the same functions unless described otherwise. In the drawings, in the case where a plurality of the same elements are provided, addition of reference signs and descriptions thereof can be omitted in some cases. In addition, there is a case where the drawing is schematically expressed for the sake of convenience of illustration and description, and therefore the shapes, sizes, and arrangement of the elements illustrated in the drawings do not necessarily match those of the elements illustrated in other drawings and the elements in the real world.

### First Embodiment

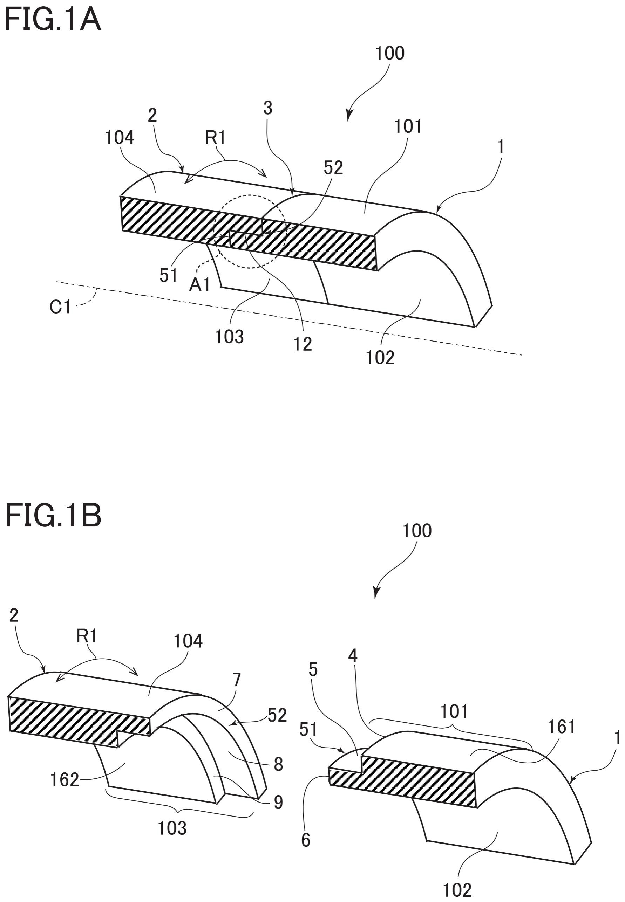

FIGS. 1A and 1 B are each an explanatory diagram of a portion of a unit 100 according to the first embodiment. The unit 100 approximately has a cylindrical shape. The unit 100 includes a component 1 and a component 2. The components 1 and 2 are engaged with each other such that one of the components 1 and 2 is relatively movable with respect to the other of the components 1 and 2. FIG. 1A illustrates a state in which the components 1 and 2 are engaged with each other. FIG. 1B illustrates a state in which the components 1 and 2 are separate from each other for the sake of convenience of description. As illustrated in FIG. 1A, a part 51 of the component 1 and a part 52 of the component 2 oppose each other. A gap 3 is provided between the portion 51 of the component 1 and the portion 52 of the component 2, and a lubricant 12 such as a grease or oil is provided in the gap 3.

The components 1 and 2 are each a component having a cylindrical shape. One of the components 1 and 2 is rotatable in a peripheral direction R1 of the unit 100 with respect to the other of the components 1 and 2. The one of the components 1 and 2 is, for example, the component 2, and the other of the components 1 and 2 is, for example, the component 1. The peripheral direction R1 is a rotation direction about a rotation axis C1 of the components 1 and 2. The rotation axis C1 is an axis (center axis) indicating the rotation center of the components 1 and 2.

The material of the component 1 and the material of the component 2 can be resin, but may be a material such as metal or ceramics. In the first embodiment, the material of the component 1 and the material of the component 2 are each polycarbonate. The components 1 and 2 are each typically a resin molded product (injection molding product) formed by injection molding.

The component 1 includes an outer surface 101 and an inner surface 102, and the component 2 includes an outer surface 104 and an inner surface 103. The inner surface 102 is a surface on the opposite side to the outer surface 101. The outer surface 104 is a surface on the opposite side to the inner surface 103. The outer surface 101 can be also referred to as a front surface, the inner surface 102 can be also referred to as a back surface, the inner surface 103 can be also referred to as a front surface, and the outer surface 104 can be also referred to as a back surface. In the case where the components 1 and 2 are each an injection molding product, the components 1 and 2 are each formed by injecting a molten resin into a cavity defined by a movable mold and a stationary mold serving as molding molds. Typically, the outer surface 101 of the component 1 is molded by one of the movable mold and the stationary mold, and the inner surface 102 of the component 1 is molded by the other of the movable mold and the stationary mold. Typically, the inner surface 103 of the component 2 is molded by one of the movable mold and the stationary mold, and the outer surface 104 of the component 2 is molded by the other of the movable mold and the stationary mold.

The outer surface 101 of the component 1 includes an outer region 161 exposed to the outside of the unit 100. The inner surface 103 of the component 2 includes an inner region 162 exposed to the inside of the unit 100. The outer region 161 of the component 1 and the outer surface 104 of the component 2 are each a portion of the outer surface of the unit 100. The inner surface 102 of the component 1 and the inner region 162 of the component 2 are each a portion of the inner surface of the unit 100.

In the first embodiment, the part 51 of the component 1 includes a surface 4, a surface 5, and a surface 6. The surfaces 4 and 5 are each a part of the outer surface 101 of the component 1, and the surface 6 is an end surface connected to the outer surface 101 and the inner surface 102 of the component 1. The surface 5 connected to the surface 4 and the surface 6 is provided between the surfaces 4 and 6. A burr originating from a parting line of the molds in the injection molding can be present on the end surface. To be noted, as the parting line of the molds, in addition to the parting line between the movable mold and the stationary mold, a parting line between pieces of a mold can be present in the case where the movable mold or the stationary mold is constituted by a plurality of pieces.

In addition, in the first embodiment, the part 52 of the component 2 includes a surface 7, a surface 8, and a surface 9. The surfaces 9 and 8 are each a portion of the inner surface 103 of the component 2, and the surface 7 is an end surface connected to the outer surface 104 and the inner surface 103 of the component 2. The surface 8 connected to the surface 7 and the surface 9 is provided between the surfaces 7 and 9. The surface 4 opposes the surface 7, the surface 5 opposes the surface 8, and the surface 6 opposes the surface 9. In the outer surface 101 of the component 1, a portion other than the surfaces 4 and 5 does not oppose the component 2. In the inner surface 103 of the component 2, a portion other than the surfaces 8 and 9 does not oppose the component 1.

In the first embodiment, the component 1 is an example of a first component, and the component 2 is an example of a second component. In addition, in the first embodiment, the outer surface 101 of the component 1 is an example of a first surface, the inner surface 102 of the component 1 is an example of a second surface, the inner surface 103 of the component 2 is an example of a third surface, and the outer surface 104 of the component 2 is an example of a fourth surface.

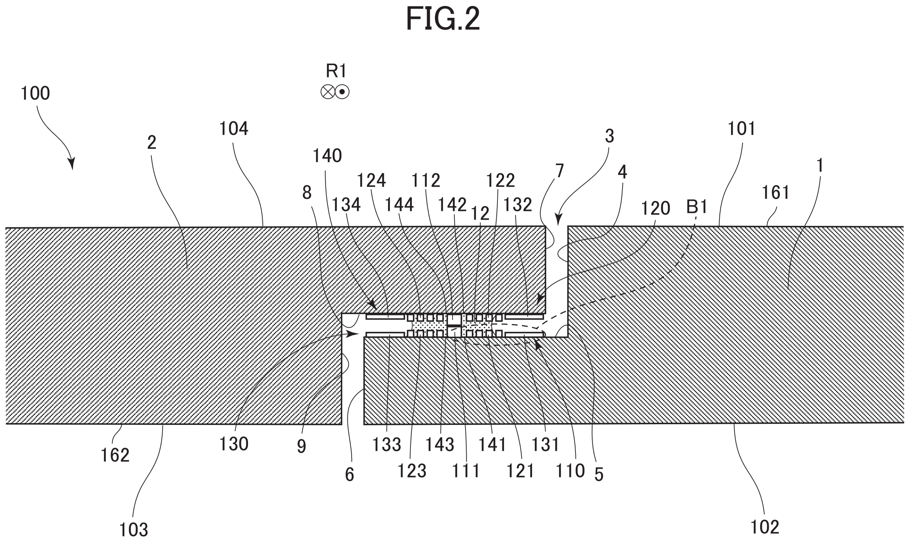

FIG. 2 is a section view of the unit 100 according to the first embodiment. FIG. 2 illustrates a cross-section of a range indicated by a circle A1 in FIG. 1A.

As illustrated in FIG. 2, the surface 5 of the component 1 includes a sliding region 111. The sliding region 111 is an example of a first region. The sliding region 111 is a belt-shaped region extending in the peripheral direction R1. The sliding region 111 of the component 1 is relatively slidable with respect to the component 2 with the lubricant 12 therebetween.

In addition, the surface 5 of the component 1 includes an intermediate region 141, a concavo-convex structure region 121, and a smooth surface region 131. The intermediate region 141, the concavo-convex structure region 121, and the smooth surface region 131 are each a belt-shaped region extending in the peripheral direction R1. The concavo-convex structure region 121 is an example of a second region, the smooth surface region 131 is an example of a third region, and the intermediate region 141 is an example of a fourth region.

In the gap 3, the intermediate region 141, the concavo-convex structure region 121, and the smooth surface region 131 are arranged in this order along the outer surface 101 in a direction from the sliding region 111 toward the outside of the unit 100. That is, the concavo-convex structure region 121 is disposed between the sliding region 111 and the smooth surface region 131 along the outer surface 101. The intermediate region 141 is disposed between the sliding region 111 and the concavo-convex structure region 121 along the outer surface 101.

The inner surface 103 (surface 8) of the component 2 opposes the sliding region 111, the intermediate region 141, the concavo-convex structure region 121, and the smooth surface region 131 of the component 1. That is, the sliding region 111, the intermediate region 141, the concavo-convex structure region 121, and the smooth surface region 131 of the component 1 overlap with the inner surface 103 (surface 8) of the component 2 in a direction orthogonal to the rotation axis C1. In addition, the outer region 161 of the component 1 is exposed to the outside of the unit 100. Therefore, the outer region 161 of the component 1 does not oppose the inner surface 103 of the component 2.

In addition, the surface 8 of the component 2 includes a sliding region 112. The sliding region 112 is a belt-shaped region extending in the peripheral direction R1. The sliding region 112 of the component 2 is relatively slidable with respect to the component 1 with the lubricant 12 therebetween.

In addition, the surface 8 of the component 2 includes an intermediate region 142, a concavo-convex structure region 122, and a smooth surface region 132. The intermediate region 142, the concavo-convex structure region 122, and the smooth surface region 132 are each a belt-shaped region extending in the peripheral direction R1.

In the gap 3, the intermediate region 142, the concavo-convex structure region 122, and the smooth surface region 132 are arranged in this order along the inner surface 103 in a direction from the sliding region 112 toward the outside of the unit 100. That is, the concavo-convex structure region 122 is disposed between the sliding region 112 and the smooth surface region 132 along the inner surface 103. The intermediate region 142 is disposed between the sliding region 112 and the concavo-convex structure region 122 along the inner surface 103.

The outer surface 101 (surface 5) of the component 1 opposes the sliding region 112, the intermediate region 142, the concavo-convex structure region 122, and the smooth surface region 132 of the component 2. That is, the sliding region 112, the intermediate region 142, the concavo-convex structure region 122, and the smooth surface region 132 of the component 2 overlap with the outer surface 101 (surface 5) of the component 1 in a direction orthogonal to the rotation axis C1. In addition, the inner region 162 of the component 2 is exposed to the inside of the unit 100. Therefore, the inner region 162 of the component 2 does not oppose the outer surface 101 of the component 1.

In addition, the surface 5 of the component 1 includes an intermediate region 143, a concavo-convex structure region 123, and a smooth surface region 133. The intermediate region 143, the concavo-convex structure region 123, and the smooth surface region 133 are each a belt-shaped region extending in the peripheral direction R1.

In the gap 3, the intermediate region 143, the concavo-convex structure region 123, and the smooth surface region 133 are arranged in this order along the outer surface 101 in a direction from the sliding region 111 toward the inside of the unit 100. That is, the concavo-convex structure region 123 is disposed between the sliding region 111 and the smooth surface region 133 along the outer surface 101. The intermediate region 143 is disposed between the sliding region 111 and the concavo-convex structure region 123 along the outer surface 101.

The inner surface 103 (surface 8) of the component 2 opposes the intermediate region 143, the concavo-convex structure region 123, and the smooth surface region 133 of the component 1. That is, the intermediate region 143, the concavo-convex structure region 123, and the smooth surface region 133 of the component 1 overlap with the inner surface 103 (surface 8) of the component 2 in a direction orthogonal to the rotation axis C1.

In addition, the surface 8 of the component 2 includes an intermediate region 144, a concavo-convex structure region 124, and a smooth surface region 134. The intermediate region 144, the concavo-convex structure region 124, and the smooth surface region 134 are each a belt-shaped region extending in the peripheral direction R1.

In the gap 3, the intermediate region 144, the concavo-convex structure region 124, and the smooth surface region 134 are arranged in this order along the inner surface 103 in a direction from the sliding region 112 toward the inside of the unit 100. That is, the concavo-convex structure region 124 is disposed between the sliding region 112 and the smooth surface region 134 along the inner surface 103. The intermediate region 144 is disposed between the sliding region 112 and the concavo-convex structure region 124 along the inner surface 103.

The outer surface 101 (surface 5) of the component 1 opposes the intermediate region 144, the concavo-convex structure region 124, and the smooth surface region 134 of the component 2. That is, the intermediate region 144, the concavo-convex structure region 124, and the smooth surface region 134 of the component 2 overlap with the outer surface 101 (surface 5) of the component 1 in a direction orthogonal to the rotation axis C1.

As described above, the surface 5 includes a region group 110 including the intermediate region 141, the concavo-convex structure region 121, and the smooth surface region 131, and a region group 130 including the intermediate region 143, the concavo-convex structure region 123, and the smooth surface region 133. In addition, the surface 8 includes a region group 120 including the intermediate region 142, the concavo-convex structure region 122, and the smooth surface region 132, and a region group 140 including the intermediate region 144, the concavo-convex structure region 124, and the smooth surface region 134.

The sliding region 111 and the region group 110 will be described below. To be noted, the sliding region 112 has a similar configuration to the sliding region 111, the concavo-convex structure region 122, the concavo-convex structure region 123, and the concavo-convex structure region 124 each have a similar configuration to the concavo-convex structure region 121, the smooth surface region 132, the smooth surface region 133, and the smooth surface region 134 each have a similar configuration to the smooth surface region 131, and the intermediate region 142, the intermediate region 143, and the intermediate region 144 each have a similar configuration to the intermediate region 141. Therefore, description of the sliding region 112, the region group 120, the region group 130, and the region group 140 will be omitted.

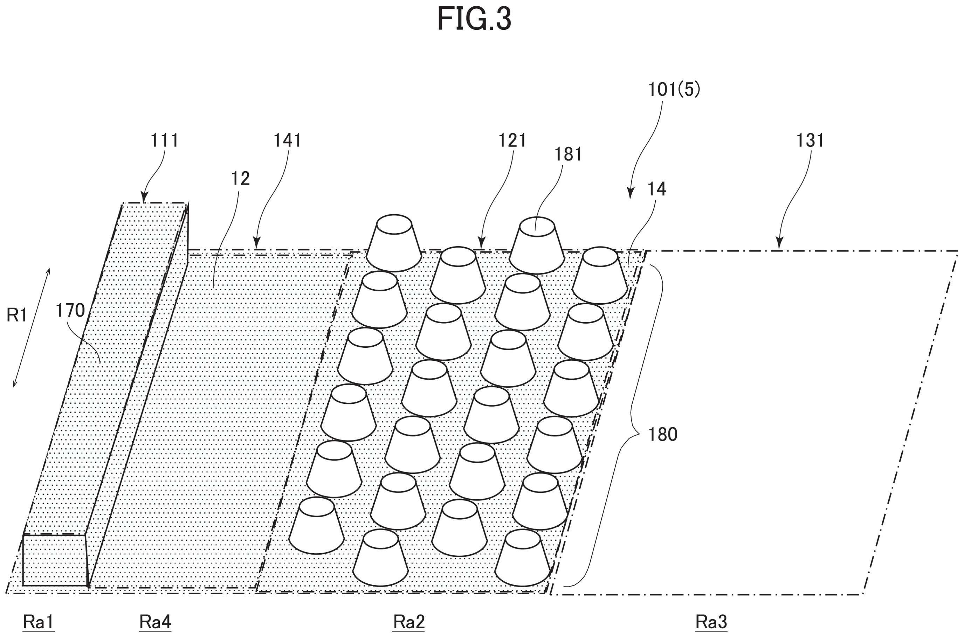

FIG. 3 is an enlarged perspective view of a portion of the outer surface 101 of the component 1 according to the first embodiment. FIG. 3 illustrates a perspective view of the surface 5 of the outer surface 101 in a range indicated by a circle B1 in FIG. 2.

In the first embodiment, the intermediate region 141 is disposed adjacent to the sliding region 111, the concavo-convex structure region 121 is disposed adjacent to the intermediate region 141, and the smooth surface region 131 is disposed adjacent to the concavo-convex structure region 121. The lubricant 12 is provided in the sliding region 111, the intermediate region 141, and the concavo-convex structure region 121.

The surface 5 of the component 1 includes at least one streak of a protruding portion 170 extending in the peripheral direction R1. The sliding region 111 is provided in the protruding portion 170. The distance between the sliding region 111 and the component 2 is smaller than the distance between the concavo-convex structure region 121 and the component 2. By reducing the distance between the sliding region 111 and the component 2, rattling caused by the sliding can be suppressed, and thus relative movement with high precision can be realized. By providing the protruding portion 170, the distance between the sliding region 111 and the component 2 can be reduced while avoiding contact between the concavo-convex structure region 121 and the component 2.

The concavo-convex structure region 121 includes a base surface 14 and a concavo-convex structure 180 including a plurality of protrusions 181 protruding with respect to the base surface 14. The protruding portion 170 protrudes with respect to the intermediate region 141 and the base surface 14 of the concavo-convex structure region 121.

The sliding region 111, the intermediate region 141, and the smooth surface region 131 are each, for example, a mirror surface, and the concavo-convex structure region 121 is, for example, a rough surface. In the description below, the arithmetic mean roughness Ra of the sliding region 111 at a sampling length of 700 µm will be referred to as an arithmetic mean roughness Ra1, the arithmetic mean roughness Ra of the concavo-convex structure region 121 at a sampling length of 700 µm will be referred to as an arithmetic mean roughness Ra2, the arithmetic mean roughness Ra of the smooth surface region 131 at a sampling length of 700 µm will be referred to as an arithmetic mean roughness Ra3, and the arithmetic mean roughness Ra of the intermediate region 141 at a sampling length of 700 µm will be referred to as an arithmetic mean roughness Ra4.

In the first embodiment, the arithmetic mean roughness Ra1 of the sliding region 111, the arithmetic mean roughness Ra4 of the intermediate region 141, and the arithmetic mean roughness Ra3 of the smooth surface region 131 are smaller than the arithmetic mean roughness Ra2 of the concavo-convex structure region 121. In other words, the arithmetic mean roughness Ra2 of the concavo-convex structure region 121 is larger than the arithmetic mean roughness Ra1 of the sliding region 111, the arithmetic mean roughness Ra4 of the intermediate region 141, and the arithmetic mean roughness Ra3 of the smooth surface region 131.

To summarize the magnitude relationship of the arithmetic mean roughness Ra1 to Ra4, (Ra1, Ra4, or Ra3) < (Ra2) holds. To be noted, in the first embodiment, the magnitude relationship between the arithmetic mean roughness Ra1, the arithmetic mean roughness Ra3, and the arithmetic mean roughness Ra4 does not matter.

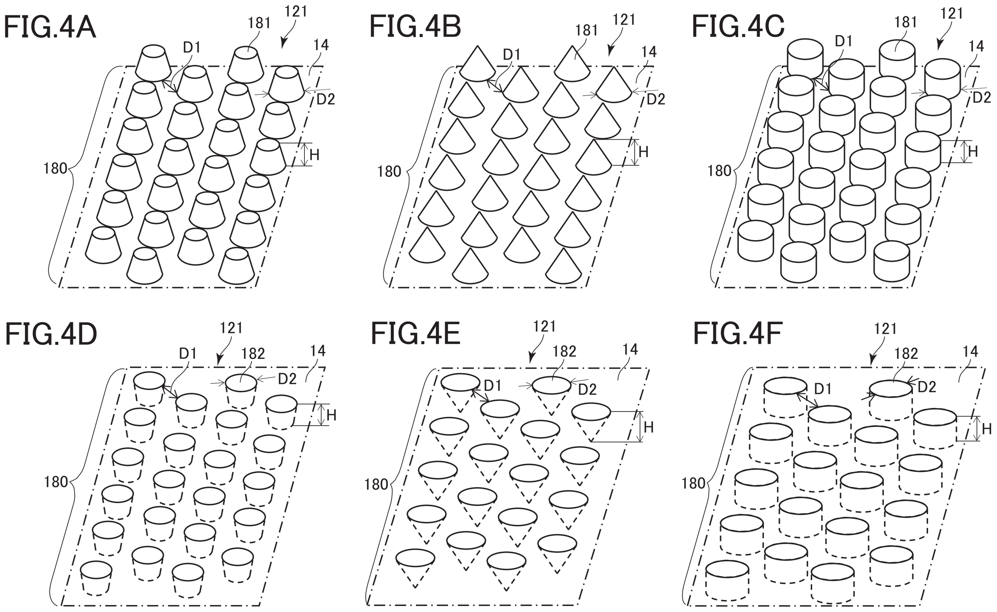

FIG. 4A is an explanatory diagram of the concavo-convex structure 180 according to the first embodiment. FIGS. 4B to 4F are each an explanatory diagram of the concavo-convex structure 180 according to a modification example of the first embodiment. As illustrated in FIG. 4A, the concavo-convex structure 180 includes a plurality of protrusions 181. The plurality of protrusions 181 are arranged with a gap therebetween to protrude with respect to the base surface 14. The plurality of protrusions 181 illustrated in FIG. 4A each have a truncated cone shape. To be noted, the shape of each of the plurality of protrusions 181 is not limited to a truncated cone shape, and may be an arbitrary shape such as a conical shape illustrated in FIG. 4B or a cylindrical shape illustrated in FIG. 4C as long as the plurality of protrusions 181 have a function to seal the lubricant 12. In addition, although a case where the concavo-convex structure 180 includes the plurality of protrusions 181 protruding with respect to the base surface 14 has been described, the configuration is not limited to this, and the concavo-convex structure 180 may include a plurality of recesses 182 recessed with respect to the base surface 14 instead of the plurality of protrusions 181 or in addition to the plurality of protrusions 181 as illustrated in FIGS. 4D, 4E, and 4F. Further, the shape of each of the plurality of recesses 182 may be an arbitrary shape such as a truncated cone shape illustrated in FIG. 4D, a conical shape illustrated in FIG. 4E, or a cylindrical shape illustrated in FIG. 4F.

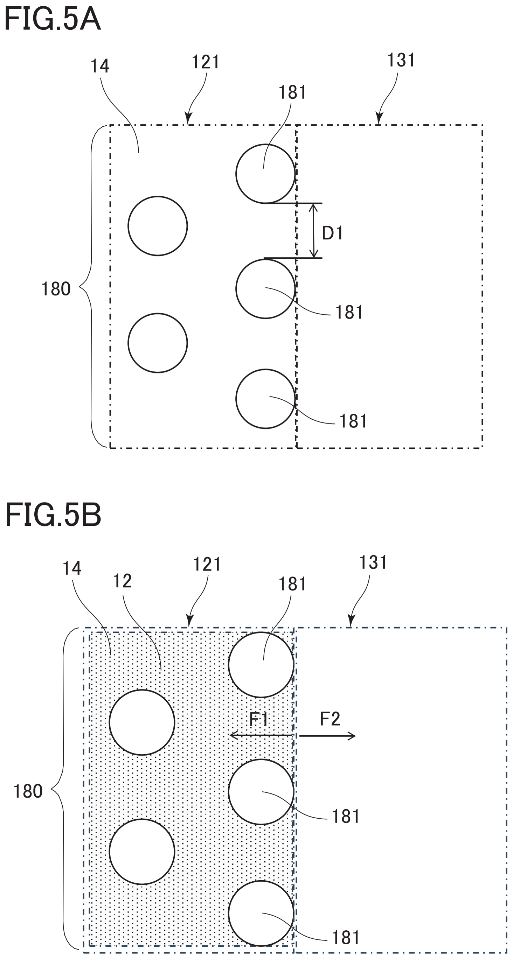

Next, an effect of suppressing leakage of the lubricant 12 will be described. FIGS. 5A and 5B are explanatory diagrams of a portion of the concavo-convex structure region 121 and a portion of the smooth surface region 131 according to the first embodiment. A distance D1 between two adjacent protrusions 181 in the plurality of protrusions 181 of the concavo-convex structure region 121 will be described with reference to FIGS. 5A and 5B. To be noted, in the case where the concavo-convex structure 180 includes a plurality of recesses 182 as illustrated in FIGS. 4D to 4F, the distance D1 is a distance between two adjacent recesses 182 in the plurality of recesses 182.

FIGS. 5A and 5B illustrate a portion of arrangement of the protrusions 181 of the concavo-convex structure 180 as viewed in the normal direction of the base surface 14 of the concavo-convex structure region 121. In FIGS. 5A and 5B, the sliding region 111 that is not illustrated is provided on the left side of the concavo-convex structure region 121, and the right side of the smooth surface region 131 in FIGS. 5A and 5B is the outside of the unit 100. The plurality of protrusions 181 are arranged on the base surface 14 at the distance D1.

As illustrated in FIG. 5B, a capillary force F1 that causes the lubricant 12 to enter between the two adjacent protrusions 181 by capillary action acts on the lubricant 12. The lubricant 12 can be held in the concavo-convex structure region 121 by this capillary force F1. Further, the smooth surface region 131 is disposed adjacent to the concavo-convex structure region 121 on the right side of the concavo-convex structure region 121 in FIG. 5B, that is, on the side closer to the outside of the unit 100 with respect to the concavo-convex structure region 121. As a result of this, a tensile force F2 pulling the lubricant 12 toward the outside is reduced. Therefore, the lubricant 12 is less likely to advance to the smooth surface region 131, and thus leakage of the lubricant 12 to the outside of the unit 100 can be suppressed. To develop the interaction between the capillary force F1 and the tensile force F2, it is better that the distance between the concavo-convex structure region 122 and the smooth surface region 132 is smaller. The distance between the concavo-convex structure region 122 and the smooth surface region 132 is, for example, 5 mm or less, can be 1 mm or less, can be 500 µm or less, can be 100 µm or less, and may be the distance D1 or less. The arithmetic roughness of a region between the concavo-convex structure region 122 and the smooth surface region 132 is smaller than the arithmetic mean roughness Ra2 of the concavo-convex structure region 121, may be smaller than the arithmetic mean roughness Ra3 of the smooth surface region 131, and may be similar to the arithmetic mean roughness Ra4 of the intermediate region 141.

To be noted, also in the case where the concavo-convex structure 180 includes the plurality of recesses 182, the lubricant 12 can be held in the concavo-convex structure region 121 by this capillary force of the capillary action similarly to the case of the plurality of protrusions 181. Further, the lubricant 12 is less likely to advance to the smooth surface region 131, and leakage of the lubricant 12 to the outside of the unit 100 can be suppressed. That is, the lubricant 12 can be sealed in the gap 3 by the concavo-convex structure region 121 and the smooth surface region 131.

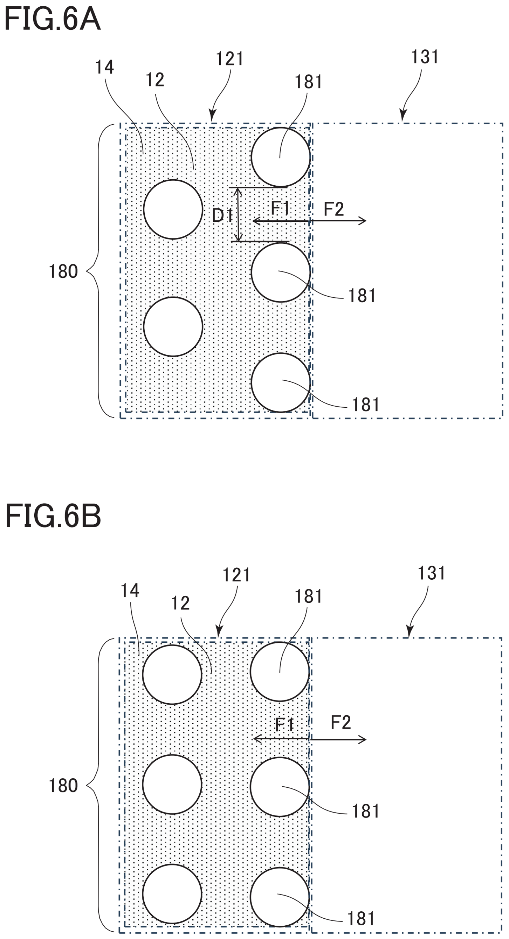

Next, the arrangement of the plurality of protrusions 181 will be described in detail. FIG. 6A is an explanatory diagram of a portion of the concavo-convex structure region 121 and a portion of the smooth surface region 131 according to the first embodiment. As illustrated in FIG. 6A, the plurality of protrusions 181 are arranged in a honeycomb pattern. FIG. 6B is an explanatory diagram of a portion of the concavo-convex structure region 121 and a portion of the smooth surface region 131 according to a modification example of the first embodiment. As illustrated in FIG. 6B, the plurality of protrusions 181 may be arranged in a lattice pattern.

The plurality of protrusions 181 are arranged in at least one line. Protrusions 181 constituting one line in the plurality of protrusions 181 are arranged in a direction intersecting with a direction from the concavo-convex structure region 121 toward the smooth surface region 131. In the case where the plurality of protrusions 181 are arranged in a plurality of lines, the plurality of lines are arranged at intervals in the direction from the concavo-convex structure region 121 toward the smooth surface region 131.

To be noted, the arrangement pattern of the plurality of protrusions 181 may be an arrangement pattern different from the lattice pattern and the honeycomb pattern and may be, for example, a random pattern, as long as the distance D1 is such a value that the lubricant 12 can be effectively held by the capillary action. In addition, also in the case where the concavo-convex structure 180 includes the plurality of recesses 182, the plurality of recesses can be arranged in various patterns similarly to the arrangement pattern of the plurality of protrusions 181.

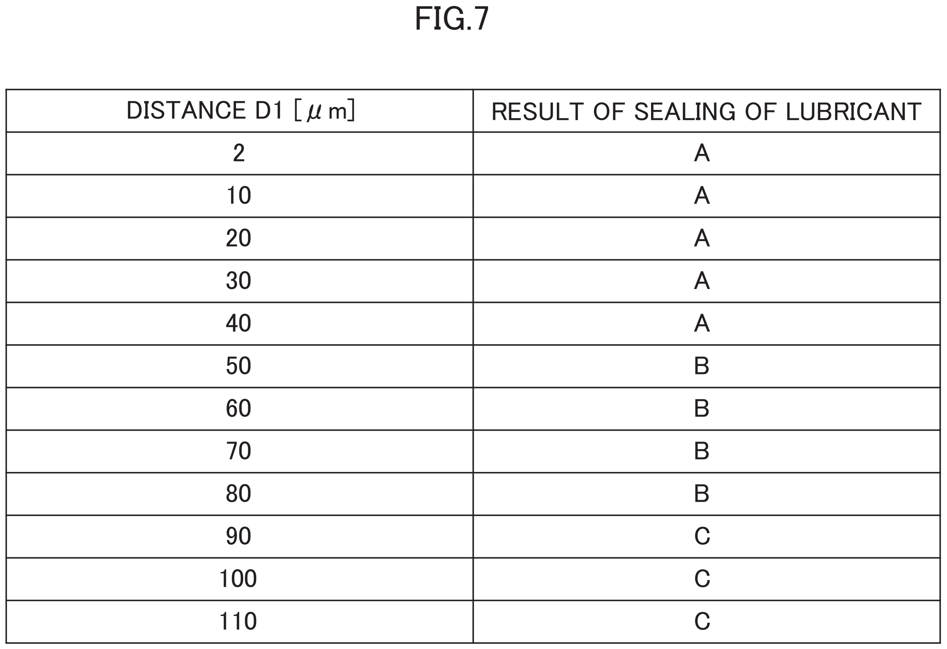

Next, the relationship between the distance D1 and the sealability of the lubricant 12 will be described. FIG. 7 is a diagram illustrating a result of the sealability of the lubricant 12 in the case where the distance D1 between two protrusions 181 according to the first embodiment is changed. Specifically, FIG. 7 illustrates a result of the sealability of the lubricant 12 in the case where the distance D1 is changed in the case where a height H of each of the plurality of protrusions 181 is set to 20 µm and a width D2 that is a diameter of each of the plurality of protrusions 181 is set to 50 µm in the embodiment illustrated in FIG. 4A. Alphabets A, B, and C in the results of sealing of the lubricant 12 in FIG. 7 indicate ranks, in which the rank A indicates that leakage of the lubricant 12 did not occur, the rank B indicates that slight leakage of part of the lubricant 12 from the gap 3 occurred, and the rank C indicates that a large part of the lubricant 12 leaked from the gap 3.

In the case where the distance D1 was 40 µm or less, the sealability of the lubricant 12 was extremely high, and in the case where the distance D1 was more than 40 µm and equal to or less than 80 µm, the sealing effect was obtained even though slight leakage of part of the lubricant 12 from the gap 3 occurred.

In the case where the distance D1 was 90 µm to 110 µm, the lubricant 12 was not sufficiently sealed in the gap 3. As described above, a result that the sealability of the lubricant 12 was higher when the distance D1 was smaller was obtained. This can be considered to be because the capillary force F1 is stronger when the distance D1 is smaller as described above.

As described above, the distance D1 between two adjacent protrusions 181 can be 80 µm or less, and can be 40 µm or less. In addition, the distance D1 between two adjacent protrusions 181 can be 2 µm or more. Similarly in the case where the concavo-convex structure 180 includes the plurality or recesses 182, the distance D1 between two adjacent recesses 182 can be 80 µm or less, and can be 40 µm or less. In addition, the distance D1 between two adjacent recesses 182 can be 2 µm or more.

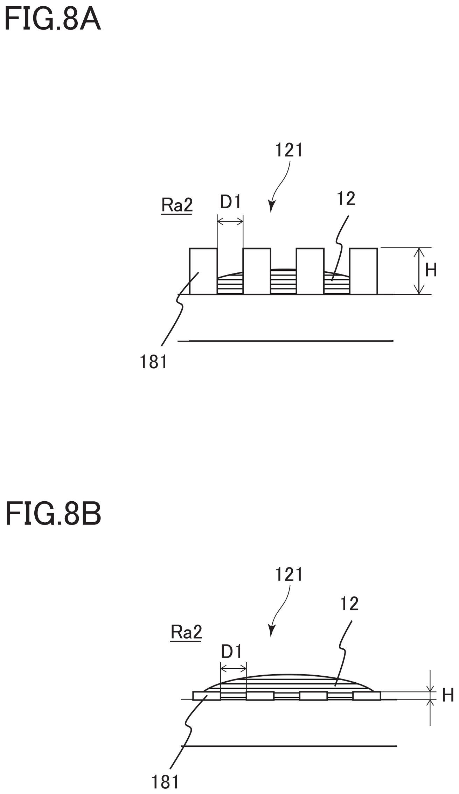

Next, the height H of each of the plurality of protrusions 181 of the concavo-convex structure region 121 will be described with reference to FIGS. 8A and 8B. FIGS. 8A and 8B are each a section view of a portion of the concavo-convex structure region 121 according to the first embodiment. The height H of each of the plurality of protrusions 181 is a height with respect to the base surface 14.

As illustrated in FIG. 8A, in the case where the height H of each protrusion 181 is sufficiently large, the capillary force F1 can be sufficiently strong to hold the lubricant 12 between the plurality of protrusions 181. In contrast, as illustrated in FIG. 8B, in the case where the height H of each of the plurality of protrusions 181 is small, the lubricant 12 cannot be held sufficiently between the plurality of protrusions 181, and it is difficult to hold the lubricant 12 by the capillary force F1.

Therefore, the height H of each of the plurality of protrusions 181 for holding the lubricant 12 by the capillary force F1 can be 1 µm or more, and can be 10 µm or more. The upper limit value of the height H can be less than a half of the width of a gap between the base surface 14 of the concavo-convex structure region 121 of the component 1 and a base surface of the concavo-convex structure region 122 of the component 2 opposing the base surface 14. In addition, the height H of each of the plurality of protrusions 181 can be 100 µm or less, and can be 50 µm or less.

Although a case where the concavo-convex structure 180 includes the plurality of protrusions 181 has been described above, in the case where the concavo-convex structure 180 includes the plurality of recesses 182, the height H of each of the plurality of recesses 182 is a depth with respect to the base surface 14, and can be in a similar range to the height H of each of the plurality of protrusions 181.

Next, the arithmetic mean roughness Ra2 of the concavo-convex structure region 121 will be described. The arithmetic mean roughness Ra2 of the concavo-convex structure region 121 is determined by the height H of each of the plurality of protrusions 181 and the distance D1. As described above, the height H of each protrusion 181 is preferably large and the distance D1 is preferably small based on the relationship between the height H of each of the plurality of protrusions 181 and the distance D1. This means that it is more preferable that the arithmetic mean roughness Ra2 of the concavo-convex structure 180 is larger. Specifically, the arithmetic mean roughness Ra2 of the concavo-convex structure region 121 can be more than 0.5 µm. In addition, the arithmetic mean roughness Ra2 of the concavo-convex structure region 121 can be 1.6 µm or more, can be 3.2 µm or more, and can be 5.0 µm or more.

Further, in the range of the arithmetic mean roughness Ra2 of the concavo-convex structure region 121, particularly the range can be 1.6 µm or more and 100 µm or less, and can be 3.2 µm or more and 10 µm or less.

In addition, to avoid contact of the concavo-convex structure region 121 with the component 2 opposed thereto, the arithmetic mean roughness Ra2 of the concavo-convex structure region 121 can be 100 µm or less, and can be 10 µm or less.

Next, the width D2 of each of the plurality of protrusions 181 of the concavo-convex structure 180 will be described. As described above, the lubricant 12 can be held by the plurality of protrusions 181 as a result of the capillary force F1 acting between the plurality of protrusions 181 of the concavo-convex structure 180 as described above. Since the capillary force F1 is insufficient in the case where the width D2 of the protrusion 181 is excessively large, it is more preferable that the width D2 of the protrusion 181 is smaller. Specifically, the width D2 of each of the plurality of protrusions 181 can be 100 µm or less, and can be 50 µm or less. To be noted, in the case where the concavo-convex structure 180 includes the plurality of recesses 182, the width D2 of each of the plurality of recesses 182 can be 100 µm or less, and can be 50 µm or less.

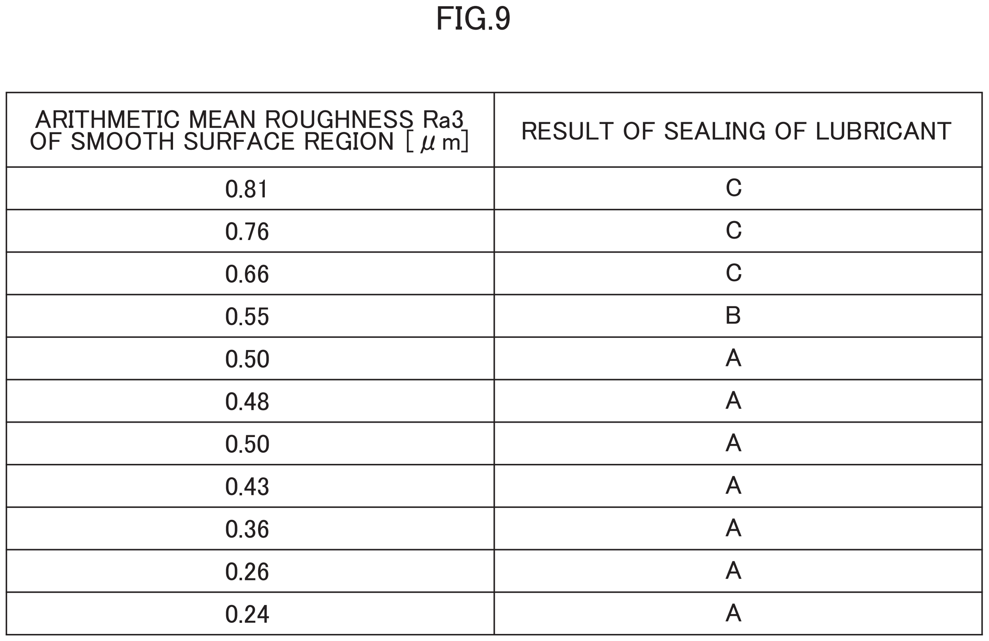

Next, the arithmetic mean roughness Ra3 of the smooth surface region 131 will be described. FIG. 9 is a diagram illustrating a result of the sealability of the lubricant 12 in the case where the arithmetic mean roughness Ra3 of the smooth surface region 131 according to the first embodiment is changed. Specifically, FIG. 9 illustrates a result of the sealability of the lubricant 12 in the case where the surface roughness Ra3 of the smooth surface region 131 is changed in the case where the height H of each of the plurality of protrusions 181 is set to 20 µm, the width D2 that is a diameter of each of the plurality of protrusions 181 is set to 50 µm, and the distance D1 is set to 10 µm in the embodiment illustrated in FIG. 4A. Alphabets A, B, and C in the results of sealing of the lubricant in FIG. 9 indicate ranks, in which the rank A indicates that leakage of the lubricant 12 did not occur, the rank B indicates that slight leakage of part of the lubricant 12 from the gap 3 occurred, and the rank C indicates that a large part of the lubricant 12 leaked from the gap 3.

In the case where the arithmetic mean roughness Ra3 of the smooth surface region 131 was 0.5 µm or less, the sealability of the lubricant 12 was extremely high, and in the case where the arithmetic mean roughness Ra3 of the smooth surface region 131 was 0.55 µm, the sealing effect was obtained even though slight leakage of part of the lubricant 12 from the gap 3 occurred. To be noted, considering the processibility to process the smooth surface region 131 into a mirror surface, the arithmetic mean roughness Ra3 of the smooth surface region 131 can be 0.01 µm or more.

In the case where the arithmetic mean roughness Ra3 of the smooth surface region 131 was 0.66 µm to 0.81 µm, the lubricant 12 was not sufficiently sealed in the gap 3. This can be considered to be because a tensile force F2 to pull the lubricant 12 toward the smooth surface region 131 side is stronger when the arithmetic mean roughness Ra3 of the smooth surface region 131 is smaller as described above.

As described above, the arithmetic mean roughness Ra3 of the smooth surface region 131 can be 0.01 µm or more and 0.55 µm or less. In addition, the arithmetic mean roughness Ra3 of the smooth surface region 131 can be 0.5 µm or less. In addition, the arithmetic mean roughness Ra3 of the smooth surface region 131 can be 0.24 µm or more.

In addition, in the first embodiment, the sliding region 111 can be a mirror surface similarly to the smooth surface region 131. That is, the arithmetic mean roughness Ra1 of the sliding region 111 can be 0.01 µm or more and 0.55 µm or less. In addition, the arithmetic mean roughness Ra1 of the sliding region 111 can be 0.5 µm or less. In addition, the arithmetic mean roughness Ra1 of the sliding region 111 can be 0.24 µm or more.

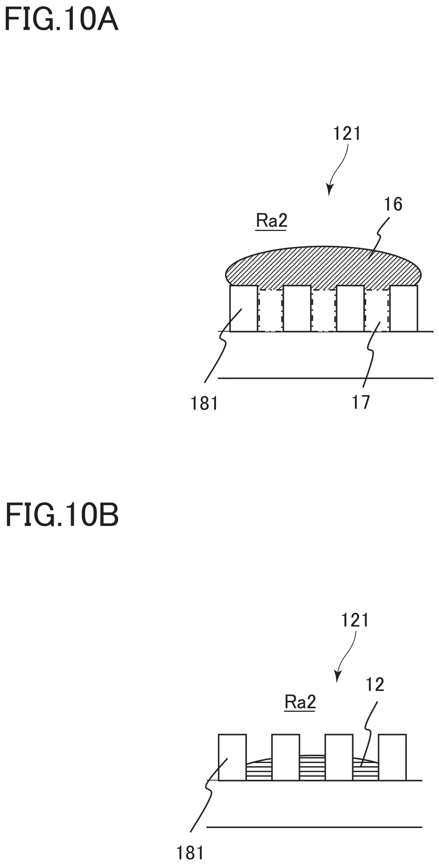

Next, the surface tension of a liquid and the sealability of a liquid will be described. FIGS. 10A and 10B are each a section view of a portion of the concavo-convex structure region 121 of the first embodiment. As illustrated in FIG. 10A, by disposing water 16 in the concavo-convex structure region 121, a good water-repelling state can be realized by supporting the water 16 by the concavo-convex structure region 121 and an air layer 17 and increasing the apparent contact angle θ caused by the surface tension of the water 16. Typically, the surface tension of water is 72 mN/m, and the surface tension of the lubricant 12 of the first embodiment is, for example, 10 mN/m to 30 mN/m. The surface tension is a force of the liquid to collect itself.

In contrast, in the first embodiment, the lubricant 12 is disposed in the concavo-convex structure region 121 as illustrated in FIG. 10B. Therefore, the surface tension of the lubricant 12 is small, and as a result of the lubricant 12 being held between the plurality of protrusions 181 of the concavo-convex structure region 121, the capillary force F1 is exerted, and the sealability of the lubricant 12 is exerted.

As described above, according to the first embodiment, since the surface 5 opposing the component 2 in the outer surface 101 of the component 1 includes the concavo-convex structure region 121 and the smooth surface region 131, leakage of the lubricant 12 to the outside of the unit 100 from between the components 1 and 2 can be suppressed. As a result of this, for example, attachment of the lubricant 12 to a user or a member occurring when the user or the member touches the outer surface of the unit 100 can be suppressed.

In addition, according to the first embodiment, since the surface 8 opposing the component 1 in the inner surface 103 of the component 2 includes the concavo-convex structure region 122 and the smooth surface region 132 configured in a similar manner to the concavo-convex structure region 121 and the smooth surface region 131 of the surface 5 of the component 1, leakage of the lubricant 12 to the outside of the unit 100 from between the components 1 and 2 can be suppressed.

In addition, according to the first embodiment, since the surface 5 of the component 1 includes the concavo-convex structure region 123 and the smooth surface region 133 configured in a similar manner to the concavo-convex structure region 121 and the smooth surface region 131, leakage of the lubricant 12 to the inside of the unit 100 from between the components 1 and 2 can be suppressed. As a result of this, deterioration of slidability caused by shortage of the lubricant 12 in the sliding region 111 (112) can be suppressed.

In addition, according to the first embodiment, since the surface 8 of the component 2 includes the concavo-convex structure region 124 and the smooth surface region 134 configured in a similar manner to the concavo-convex structure region 121 and the smooth surface region 131, leakage of the lubricant 12 to the inside of the unit 100 from between the components 1 and 2 can be suppressed. As a result of this, deterioration of slidability caused by shortage of the lubricant 12 in the sliding region 111 (112) can be suppressed.

That is, as a result of the unit 100 including one of the region group 130 and the region group 140, deterioration of slidability caused by shortage of the lubricant 12 in the sliding region 111 (112) can be suppressed. In addition, as a result of the unit 100 including both the region group 130 and the region group 140, deterioration of slidability caused by shortage of the lubricant 12 in the sliding region 111 (112) can be suppressed.

According to the configuration described above, in the first embodiment, leakage and spread of the lubricant 12 from the gap 3 between the components 1 and 2 to the outside of the gap 3 can be suppressed.

To be noted, although a case where the surface 5 of the component 1 includes the region group 110 and the region group 130 and the surface 8 of the component 2 includes the region group 120 and the region group 140 has been described in the first embodiment, the configuration is not limited to this. That is, from the viewpoint of suppressing the leakage of the lubricant 12 to the outside of the unit 100, region groups other than the region group 110 or the region group 120 in the region groups 110 to 140 may be omitted. For example, in the case where the region group 110 is omitted, the component 2 including the region group 120 serves as a first component, and the component 1 serves as a second component. Further, the sliding region 112 of the component 2 serves as a first region, the concavo-convex structure region 122 serves as a second region, and the smooth surface region 132 serves as a third region.

In addition, although a case where the region group 110 includes the intermediate region 141, that is, a case where the surface 5 of the component 1 includes the intermediate region 141 has been described in the first embodiment, the configuration is not limited to this, and the intermediate region 141 in the surface 5 may be omitted. Similarly, the intermediate region 142 in the region group 120 may be omitted, the intermediate region 143 in the region group 130 may be omitted, or the intermediate region 144 in the region group 140 may be omitted.

### Second Embodiment

A second embodiment will be described. In the description below, it is assumed that elements denoted by the same reference signs as in the embodiment described above have substantially the same configurations and functions as those described in the embodiment described above unless described otherwise, and part different from the embodiment described above will be mainly described.

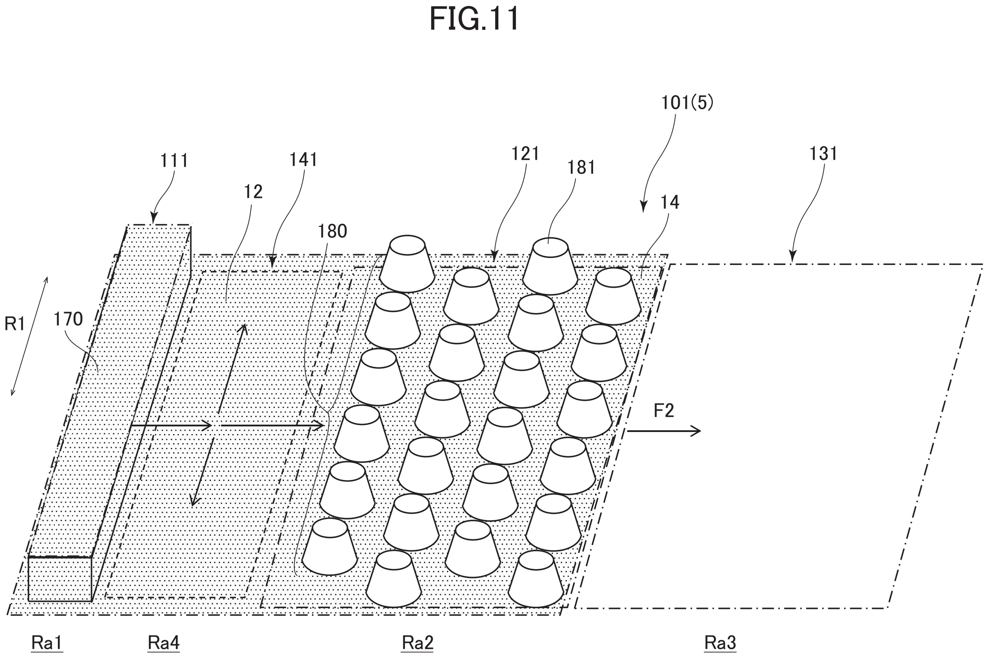

FIG. 11 is an enlarged perspective view of a portion of the outer surface 101 of the component 1 according to the second embodiment. FIG. 11 illustrates a perspective view of the surface 5 of the outer surface 101 in a range indicated by a circle B1 in FIG. 2.

In the second embodiment, the arithmetic mean roughness Ra4 of the intermediate region 141 is different from the first embodiment. The arithmetic mean roughness Ra4 of the intermediate region 141 is smaller than the arithmetic mean roughness Ra2 of the concavo-convex structure region 121, and is larger than the arithmetic mean roughness Ra1 of the sliding region 111. The arithmetic mean roughness Ra4 of the intermediate region 141 is a value between the arithmetic mean roughness Ra3 of the smooth surface region 131 and the arithmetic mean roughness Ra2 of the concavo-convex structure region 121. That is, the arithmetic mean roughness Ra4 of the intermediate region 141 is smaller than the arithmetic mean roughness Ra2 of the concavo-convex structure region 121 and larger than the arithmetic mean roughness Ra3 of the smooth surface region 131.

To be noted, the arithmetic mean roughness Ra3 of the smooth surface region 131 is smaller than the arithmetic mean roughness Ra2 of the concavo-convex structure region 121. In addition, the arithmetic mean roughness Ra1 of the sliding region 111 is smaller than the arithmetic mean roughness Ra2 of the concavo-convex structure region 121. In addition, the arithmetic mean roughness Ra1 of the sliding region 111 is smaller than the arithmetic mean roughness Ra4 of the intermediate region 141.

As described above, to summarize the magnitude relationship between the arithmetic mean roughness Ra1 to Ra4, (Ra1 or Ra3) < (Ra4) < (Ra2) holds. To be noted, in the second embodiment, the magnitude relationship between the arithmetic mean roughness Ra1 and the arithmetic mean roughness Ra3 does not matter.

As described above, as a result of the intermediate region 141 having an intermediate roughness, the lubricant 12 is diffused in the peripheral direction R1 orthogonal to a direction toward the outside of the unit 100 in the process of spread of the lubricant 12 from the sliding region 111 to the intermediate region 141. In addition, the lubricant 12 can be also held in the intermediate region 141. According to the two points described above, the tensile force F2 of the lubricant 12 to leak and spread at the boundary between the concavo-convex structure region 121 and the smooth surface region 131 can be reduced, and leakage of the lubricant 12 from between the components 1 and 2 to the outside of the unit 100 can be effectively suppressed.

In addition, from the viewpoint of suppressing the leakage of the lubricant 12, the arithmetic mean roughness Ra4 of the intermediate region 141 can be 0.5 µm or more and 1.6 µm or less. To be noted, the numerical range of each of the arithmetic mean roughness Ra1 of the sliding region 111, the arithmetic mean roughness Ra2 of the concavo-convex structure region 121, and the arithmetic mean roughness Ra3 of the smooth surface region 131 is as described in the first embodiment.

In addition, according to the second embodiment, the surface 8 opposing the component 1 in the inner surface 103 of the component 2 includes the intermediate region 142 configured in a similar manner to the intermediate region 141 of the surface 5 of the component 1, leakage of the lubricant 12 from between the components 1 and 2 to the outside of the unit 100 can be effectively suppressed.

In addition, according to the second embodiment, since the surface 5 of the component 1 includes the intermediate region 143 configured in a similar manner to the intermediate region 141, leakage of the lubricant 12 from between the components 1 and 2 to the inside of the unit 100 can be effectively suppressed. As a result of this, deterioration of slidability caused by shortage of the lubricant 12 in the sliding region 111 (112) can be suppressed.

In addition, according to the second embodiment, since the surface 8 of the component 2 includes the intermediate region 144 configured in a similar manner to the intermediate region 141, leakage of the lubricant 12 from between the components 1 and 2 to the inside of the unit 100 can be effectively suppressed. As a result of this, deterioration of slidability caused by shortage of the lubricant 12 in the sliding region 111 (112) can be suppressed.

That is, as a result of the unit 100 including one of the region groups 130 and 140, deterioration of slidability caused by shortage of the lubricant 12 in the sliding region 111 (112) can be suppressed. In addition, as a result of the unit 100 including both the region groups 130 and 140, deterioration of slidability caused by shortage of the lubricant 12 in the sliding region 111 (112) can be effectively suppressed.

According to the configuration described above, in the second embodiment, leakage and spread of the lubricant 12 from the gap 3 between the components 1 and 2 to the outside of the gap 3 can be effectively suppressed.

To be noted, although a case where the surface 5 of the component 1 includes the region group 110 and the region group 130 and the surface 8 of the component 2 includes the region group 120 and the region group 140 has been described in the second embodiment, the configuration is not limited to this. That is, from the viewpoint of suppressing the leakage of the lubricant 12 to the outside of the unit 100, region groups other than the region group 110 or the region group 120 in the region groups 110 to 140 may be omitted. For example, in the case where the region group 110 is omitted, the component 2 including the region group 120 serves as a first component, and the component 1 serves as a second component. Further, the sliding region 112 of the component 2 serves as a first region, the concavo-convex structure region 122 serves as a second region, and the smooth surface region 132 serves as a third region.

### Third Embodiment

A third embodiment will be described. In the description below, it is assumed that elements denoted by the same reference signs as in the embodiments described above have substantially the same configurations and functions as those described in the embodiments described above unless described otherwise, and part different from the embodiments described above will be mainly described.

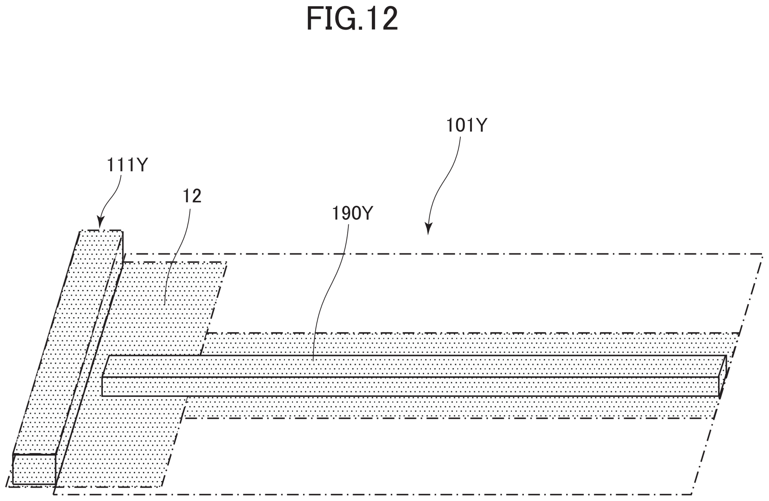

FIG. 12 is an enlarged perspective view of a portion of an outer surface 101Y of a component according to a comparative example. FIG. 12 illustrates a perspective view of the outer surface 101Y in the range indicated by the circle B1 in FIG. 2. The outer surface 101Y of Comparative Example 2 does not include the concavo-convex structure region and the smooth surface region.

As illustrated in FIG. 12, the outer surface 101Y includes a protrusion portion 190Y having a streak shape extending from a sliding region 111Y toward the outside of the unit. The protrusion portion 190Y is, for example, a burr originating from a parting line of the molds in the injection molding. In the case where the protrusion portion 190Y is present, there is a possibility that the lubricant 12 leaks to the outside of the unit via the protrusion portion 190Y.

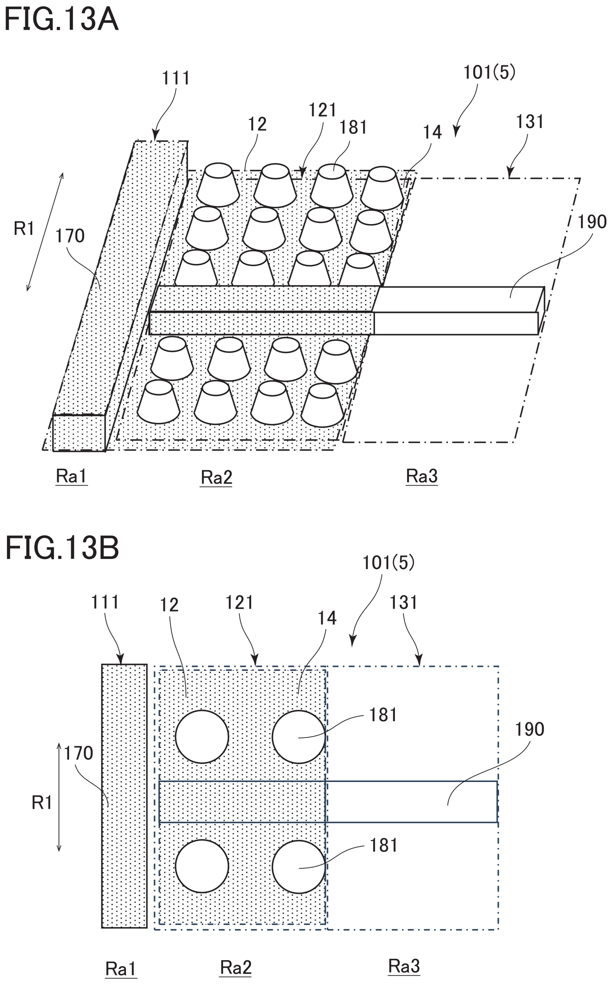

FIG. 13A is an enlarged perspective view of a portion of the outer surface 101 of the component 1 according to the third embodiment. FIG. 13B is an enlarged plan view of a portion of the outer surface 101 of the component 1 according to the third embodiment. FIG. 13A illustrates a perspective view of the outer surface 101 in a range corresponding to the range indicated by the circle B1 in FIG. 2, and FIG. 13B illustrates a plan view of the outer surface 101 in a range corresponding to the range indicated by the circle B1 in FIG. 2.

The surface 5 of the outer surface 101 includes the sliding region 111, the concavo-convex structure region 121, and the smooth surface region 131 similarly to the first embodiment. In addition, the outer surface 101 includes a protrusion portion 190 having a streak shape extending from the sliding region 111 toward the outside of the unit 100. The protrusion portion 190 is, for example, a burr originating from a parting line of the molds in the injection molding. The protrusion portion 190 is a streak-shaped protruding portion extending in the direction of the rotation axis C1 (FIG. 1A).

The protrusion portion 190 is formed in at least the concavo-convex structure region 121 and the smooth surface region 131. That is, the concavo-convex structure region 121 and the smooth surface region 131 are disposed on both sides of the protrusion portion 190 in the peripheral direction R1. As a result of this, leakage of the lubricant 12 to the outside of the unit 100 via the protrusion portion 190 can be suppressed by the concavo-convex structure region 121 and the smooth surface region 131.

To be noted, although illustration in FIGS. 13A and 13B is omitted, the intermediate region 141 (FIG. 11) described in the second embodiment can be disposed between the sliding region 111 and the concavo-convex structure region 121. As a result of this, leakage and spread of the lubricant 12 to the outside of the unit 100 via the protrusion portion 190 can be effectively suppressed by the intermediate region 141, the concavo-convex structure region 121, and the smooth surface region 131.

Next, a manufacturing method for manufacturing the components 1 and 2 of the unit 100 will be described. A manufacturing method for manufacturing the components 1 and 2 by injection molding using a mold will be described below.

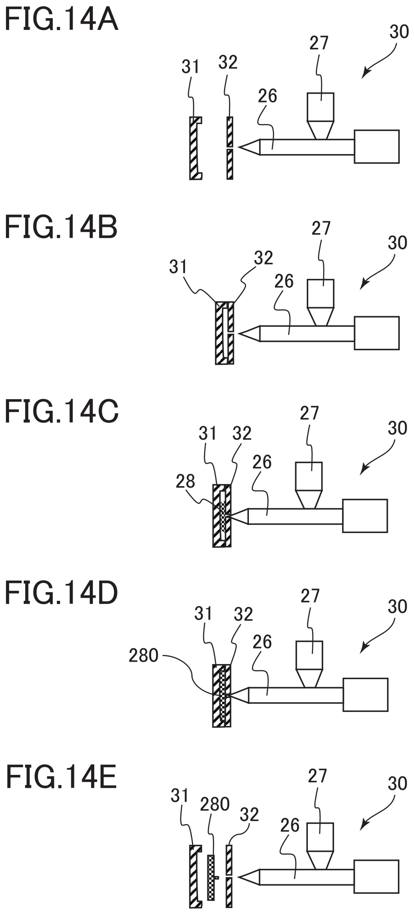

FIGS. 14A to 14E are each a diagram schematically illustrating a step of the injection molding for manufacturing a resin molded product 280 according to the third embodiment. The resin molded product 280 is the component 1 or the component 2. The resin molded product 280 is manufactured by using an injection molding machine 30. As illustrated in FIG. 14A, the injection molding machine 30 includes a tubular cylinder 26 and a hopper 27.

The hopper 27 charges a resin material into the cylinder 26. As the resin material, a thermoplastic material such as polystyrene, polycarbonate, or polypropylene can be used. In addition, a resin material colored by being mixed with a colorant such as a pigment in advance may be used.

The cylinder 26 injects a molten resin into a cavity that is a space defined by molds 31 and 32. An unillustrated screw is provided inside the cylinder 26, and the resin material supplied from the hopper 27 is delivered to the distal end of the cylinder 26 by rotating the screw by an unillustrated motor. In addition, the cylinder 26 is provided with an unillustrated heater, and the resin material supplied from the hopper 27 is heated to a temperature equal to or higher than the glass transition temperature of the resin material while the resin material is delivered to the distal end in the cylinder 26, and is melted into a liquid. Then, the resin material is reserved in a space in the distal end portion of the cylinder 26.

FIG. 14B illustrates a mold clamping step. In the mold clamping step, the molds 31 and 32 are clamped by an unillustrated mechanism. In addition, the molds 31 and 32 are heated by an unillustrated heater. The heating temperature of the molds 31 and 32 in this step will be referred to as a mold temperature.

FIG. 14C illustrates an injection step. In the injection step, the cylinder 26 is pressed against an injection port portion provided in the mold 32. Further, an unillustrated hydraulic cylinder operates to push the unillustrated screw toward the distal end of the cylinder 26, and thus the molten resin 28 is injected into the cavity inside the molds 31 and 32. The temperature of the molten resin 28 in this injection step will be referred to as a resin temperature.

FIG. 14D illustrates a dwelling step and a cooling step. In the dwelling step, the pressure of the molten resin 28 in the cavity defined by the molds 31 and 32 is held at a predetermined pressure by controlling the pressure in the cylinder 26. This pressure will be referred to as a holding pressure. Such a pressure that the resin 28 reaches every corner of the cavity defined by the molds 31 and 32 is selected as the holding pressure. In the cooling step subsequent to the holding step, the molds 31 and 32 are cooled by an unillustrated cooling mechanism. As a result of this, the resin 28 in the molds 31 and 32 is cooled to a temperature equal to or lower than the glass transition temperature, and thus the resin molded product 280 is formed. To be noted, the cooling mechanism is configured to, for example, surround the molds 31 and 32 by cooling water for cooling.

FIG. 14E illustrates a mold opening step and a mold releasing step. The molds 31 and 32 are opened by an unillustrated mechanism. Next, the resin molded product 280 is taken out from the molds 31 and 32 by an unillustrated mold releasing mechanism. When the molds 31 and 32 are opened, the resin molded product 280 is stuck to the surface of the mold 32. The mold releasing mechanism performs an operation of pushing the resin molded product 280 stuck to the surface of the mold 32 away from the mold 32 by a stick called an ejector pin penetrating the mold 32. The resin molded product 280 is obtained through the steps described above.

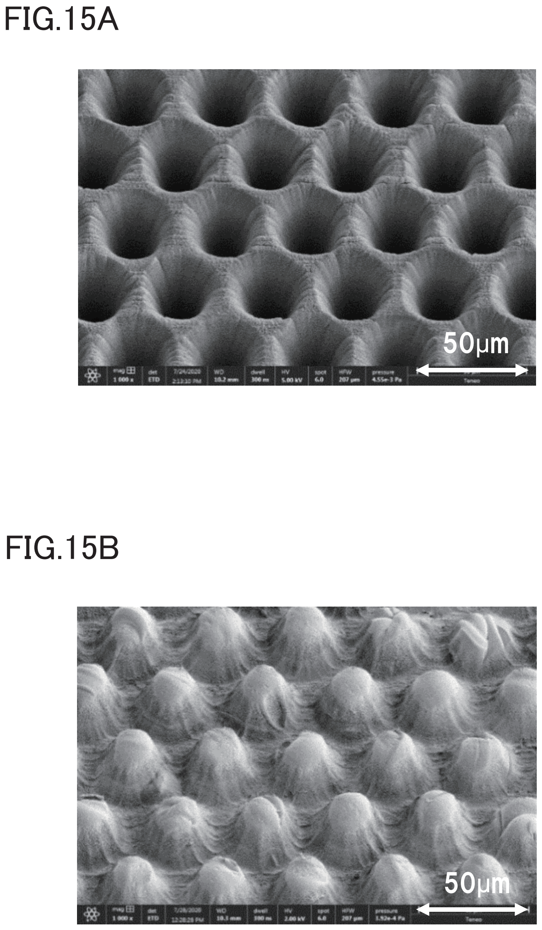

FIG. 15A is a photograph picturing a portion of the concavo-convex structure on the surface of the mold 31 according to the third embodiment observed with an electron microscope. FIG. 15B is a photograph capturing the concavo-convex structure region 121 of the component 1 according to the third embodiment observed with an electron microscope. In FIG. 15B, it can be seen that a fine structure of the honeycomb pattern to which the mold shape of FIG. 15A is transferred is formed in the concavo-convex structure region 121 of the component 1. By matching the protruding direction of the plurality of protrusions 181 and/or the recessing direction of the plurality of recesses 182 in the concavo-convex structure region 121 with the mold opening direction of the molds 31 and 32, the concavo-convex structure region of the mold 31 can be transferred to the concavo-convex structure region 121 of the component 1, and the releasability of the component 1 from the mold 31 is improved. To be noted, in the present example, the mold 31 having the concavo-convex structure is the movable mold, and the mold 32 is the stationary mold. By employing this configuration, a gate trace can be disposed on the inner surface 102 of the component 1 such that no gate trace is generated on the outer surface 101. However, the mold 31 having the concavo-convex structure may be a stationary mold, and the mold 32 may be a movable mold.

Next, a manufacturing method for the mold 31 will be described. As the manufacturing method for the mold 31, for example, a method of manufacturing a molded product to which a concavo-convex structure and a smooth surface are imparted by transferring recesses and a smooth surface formed by cutting to resin, or a method of manufacturing a molded product to which the concavo-convex structure is imparted by transferring recesses and a smooth surface formed by laser processing can be employed. In the third embodiment, recesses and a smooth surface are formed on the surface of the mold 31 by laser processing.

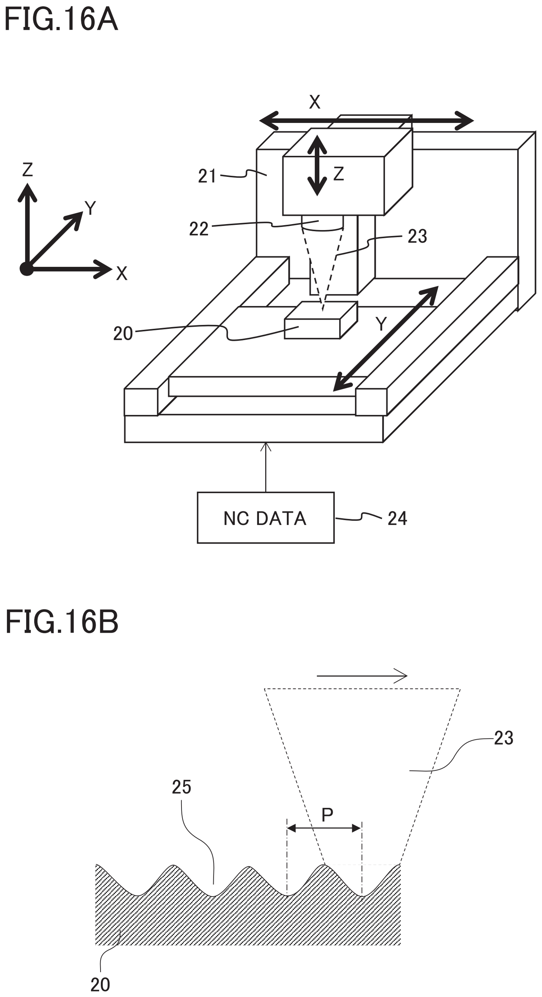

FIG. 16A is a schematic perspective view of a configuration example of a laser processing machine 21 according to the third embodiment. The laser processing machine 21 illustrated in FIG. 16A is used for forming the mold 31 by performing laser processing on a metal parent material 20.

The laser processing machine 21 includes a laser head 22. The laser processing machine 21 is configured to be capable of moving the laser head 22 along three axes of a linear axis X, a linear axis Y, and a linear axis Z. The laser head 22 includes an unillustrated galvano mirror. To be noted, the laser processing machine 21 may be configured to be capable of moving the laser head 22 in more directions.

The laser head 22 is moved by an unillustrated driving mechanism in accordance with the movement amount in each axis programmed in NC data 24. Meanwhile, the laser head 22 emits laser light in accordance with the NC data 24, and scans the parent material 20 with the laser light by using the galvano mirror. In this manner, the parent material 20 can be processed into a predetermined shape by the laser head 22.

FIG. 16B is an enlarged view illustrating the processing performed on the surface of the parent material 20 by the laser processing machine 21 according to the third embodiment. FIG. 16B illustrates a cross-section of the parent material 20 as viewed in a cross-section direction.

The mold 31 can take various shapes such as a flat surface or a complicated curved surface in accordance with the shape of the resin molded product 280. Therefore, the base surface 14 viewed in the cross-section direction is not limited to a straight line, but a case where the base surface 14 is a straight line as viewed in the cross-section direction is illustrated in FIG. 16B as an example.

The laser light 23 is emitted from the laser head 22 to form a plurality of processing holes 25 in the parent material 20. As laser light, for example, infrared light having a wavelength of 1064 nm and having a pulse width of femtoseconds can be used, but different laser light may be used.

As illustrated in FIG. 16B, the plurality of processing holes 25 are formed by irradiating the mold 31 with laser light while repetitively moving the laser light by a pitch P of the concavo-convex structure by the galvano mirror. In a region corresponding to the smooth surface region 131, a smooth surface shape can be formed by mechanical griding or laser processing in the mold 31.

As a result of the laser processing described above, the plurality of processing holes are formed as in the photograph illustrated in FIG. 15A. In the photograph, it can be seen that the plurality of processing holes are arranged in a honeycomb pattern. The mold 31 for molding is obtained through a process like this.

### Fourth Embodiment

A fourth embodiment will be described. In the description below, it is assumed that elements denoted by the same reference signs as in the embodiments described above have substantially the same configurations and functions as those described in the embodiments described above unless described otherwise, and part different from the embodiments described above will be mainly described.

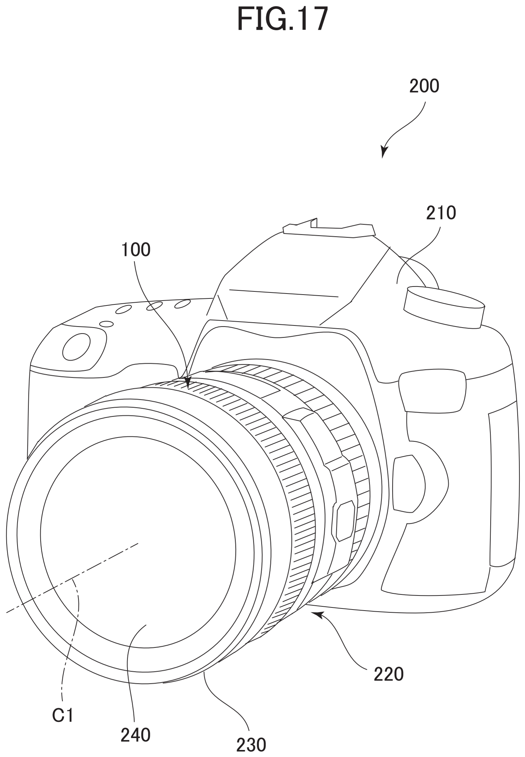

FIG. 17 is a schematic perspective view of an image pickup apparatus 200 according to the fourth embodiment. The image pickup apparatus 200 includes a camera body 210, and a replacing lens unit 220 attachable to and detachable from the camera body 210.

The replacing lens unit 220 is an example of an optical device. The replacing lens unit 220 includes a lens barrel 230 having an approximate cylindrical shape, and a lens 240 accommodated in the lens barrel 230. The lens barrel 230 is constituted by a plurality of components, and the plurality of components are coupled to each other by a method such as screwing, gluing, or fitting. The lens barrel 230 includes the unit 100.

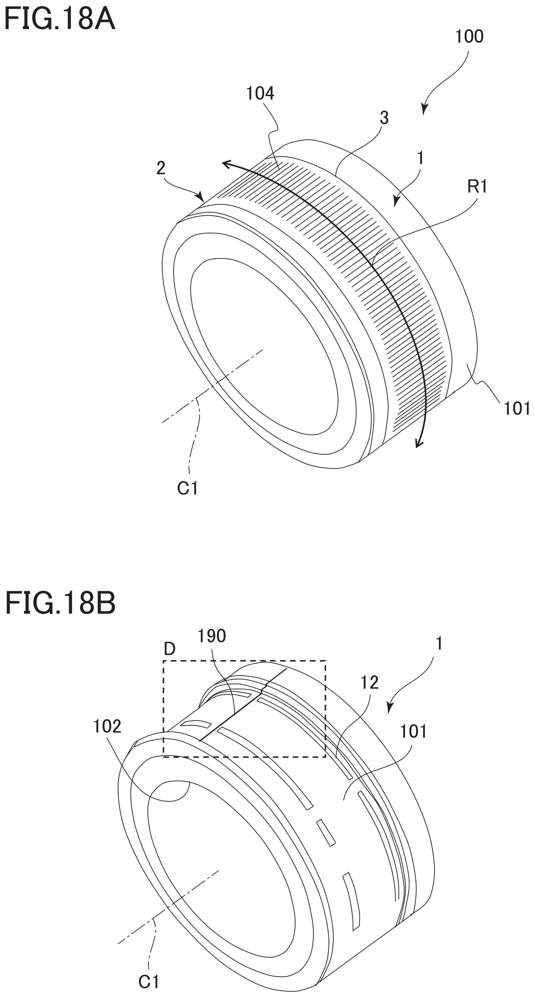

FIG. 18A is a perspective view of the unit 100 serving as a component of the lens barrel 230 according to the fourth embodiment. The unit 100 of the lens barrel 230 includes the components 1 and 2. The component 1 is an example of a first component, and the component 2 is a component of a second component.

One of the components 1 and 2 is rotatable in the peripheral direction R1 that is a rotation direction about the rotation axis C1 with respect to the other of the components 1 and 2. In the fourth embodiment, the component 2 is rotationally driven in the peripheral direction R1 about the rotation axis C1 of the unit 100 with respect to the component 1. In the fourth embodiment, the component 1 supports the component 2 by the sliding region 111.

Similarly to the first embodiment, the component 1 includes the outer surface 101 and the inner surface 102 on the opposite side to the outer surface 101. Similarly to the first embodiment, the component 2 includes an inner surface and the outer surface 104 on the opposite side to the inner surface. The outer surface 101 of the component 1 is an example of a first surface. The inner surface 102 of the component 1 is an example of a second surface. The inner surface of the component 2 is an example of a third surface. The outer surface 104 of the component 2 is an example of a fourth surface.

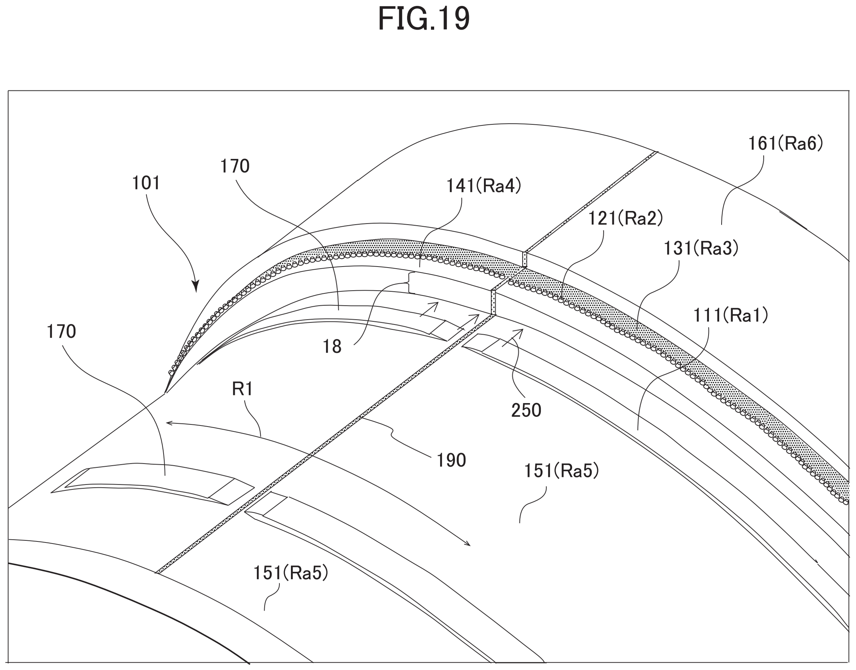

FIG. 18B is a perspective view of the component 1 according to the fourth embodiment, and FIG. 19 is an enlarged perspective view of the component 1 in a range D of FIG. 18B. The outer surface 101 of the component 1 includes a region 151, the sliding region 111, the intermediate region 141, the concavo-convex structure region 121, the smooth surface region 131, and the outer region 161. The region 151, the sliding region 111, the intermediate region 141, the concavo-convex structure region 121, the smooth surface region 131, and the outer region 161 are each a belt-shaped region extending in the peripheral direction R1. The sliding region 111 is an example of a first region, the concavo-convex structure region 121 is an example of a second region, the smooth surface region 131 is an example of a third region, the intermediate region 141 is an example of a fourth embodiment, the region 151 is an example of a fifth region, and the outer region 161 is an example of a sixth region.

The positional relationship between the sliding region 111, the intermediate region 141, the concavo-convex structure region 121, and the smooth surface region 131 is as described in the first embodiment, and the sliding region 111, the intermediate region 141, the concavo-convex structure region 121, and the smooth surface region 131 are disposed between the region 151 and the outer region 161 along the outer surface 101.

The inner surface of the component 2 opposes the region 151, the sliding region 111, the intermediate region 141, the concavo-convex structure region 121, and the smooth surface region 131 that are a portion of the outer surface 101 of the component 1. In addition, the outer region 161 that is a portion of the outer surface 101 of the component 1 other than the region 151, the sliding region 111, the intermediate region 141, the concavo-convex structure region 121, and the smooth surface region 131 is exposed to the outside of the unit 100 without opposing the inner surface of the component 2.

In addition, the magnitude relationship of the arithmetic mean roughness Ra of the sliding region 111, the intermediate region 141, the concavo-convex structure region 121, and the smooth surface region 131 at a sampling length of 700 µm is as described in the second embodiment.

In addition, the numerical range of each of the arithmetic mean roughness Ra1 of the sliding region 111, the arithmetic mean roughness Ra2 of the concavo-convex structure region 121, and the arithmetic mean roughness Ra3 of the smooth surface region 131 is as described in the first embodiment and the second embodiment. In addition, the numerical range of the arithmetic mean roughness Ra4 of the intermediate region 141 is as described in the second embodiment.

According to the configuration described above, similarly to the first embodiment or the second embodiment, leakage and spread of the lubricant 12 from the gap 3 between the components 1 and 2 to the outside of the gap 3, that is, to the outside of the unit 100 can be suppressed. Specifically, a force to leak and spread the lubricant 12 in a direction of an arrow 250 from the sliding region 111 toward the outer region 161 of the component 1 acts. In the fourth embodiment, the intermediate region 141, the concavo-convex structure region 121, and the smooth surface region 131 are arranged in the direction of the arrow 250 with respect to the sliding region 111. As a result of this, leakage and spread of the lubricant 12 from the unit 100 of the lens barrel 230 to the outside of the unit 100, that is, to the outside of the lens barrel 230 can be suppressed.

The arithmetic mean roughness Ra of the region 151 at a sampling length of 700 µm will be referred to as an arithmetic mean roughness Ra5, and the arithmetic mean roughness Ra of the outer region 161 at a sampling length of 700 µm will be referred to as an arithmetic mean roughness Ra6. In the fourth embodiment, the smooth surface region 131 is mirror-finished, but the regions 151 and the outer region 161 do not need to be mirror-finished. Therefore, the arithmetic mean roughness Ra5 of the region 151 and the arithmetic mean roughness Ra6 of the outer region 161 can be each larger than than the arithmetic mean roughness Ra3 of the smooth surface region 131. In other words, the arithmetic mean roughness Ra3 of the smooth surface region 131 can be smaller than each of the arithmetic mean roughness Ra5 of the region 151 and the arithmetic mean roughness Ra6 of the outer region 161.

In addition, since the concavo-convex structure region 121 is roughened, the arithmetic mean roughness Ra5 of the region 151 and the arithmetic mean roughness Ra6 of the outer region 161 are each smaller than the arithmetic mean roughness Ra2 of the concavo-convex structure region 121. To be noted, the outer region 161 may be decoratively processed, and in this case, the arithmetic mean roughness Ra6 of the outer region 161 may be higher than the arithmetic mean roughness Ra5 of the region 151.

In addition, the outer surface 101 of the component 1 includes the protrusion portion 190 having a streak shape disposed over at least the concavo-convex structure region 121 and the smooth surface region 131 similarly to the third embodiment. In the fourth embodiment, the protrusion portion 190 is disposed over the region 151, the sliding region 111, the intermediate region 141, the concavo-convex structure region 121, the smooth surface region 131, and the outer region 161. The protrusion portion 190 is, for example, a burr originating from a parting line of the molds in the injection molding. According to such a configuration, leakage and spread of the lubricant 12 to the outside of the unit 100 via the protrusion portion 190 can be suppressed by the concavo-convex structure region 121 and the smooth surface region 131.

In addition, the intermediate region 141 may be a flat surface as in the second embodiment, but may include a step portion 18 as illustrated in FIG. 19. The level difference at the step portion 18 can be larger than the level difference at the protruding portion 170. This step portion 18 increases the creeping distance between the sliding region 111 and the concavo-convex structure region 121, and is therefore advantageous for suppressing the leakage of the lubricant 12.

To be noted, in the component 1, regions configured in a similar manner to the intermediate region 141, the concavo-convex structure region 121, and the smooth surface region 131 may be disposed on the side opposite to the side closer to the outside of the unit 100 with respect to the sliding region 111. In addition, also on the inner surface of the component 2, regions configured in a similar manner to the outer surface 101 of the component 1 may be disposed in a region opposing the component 1.

### Example

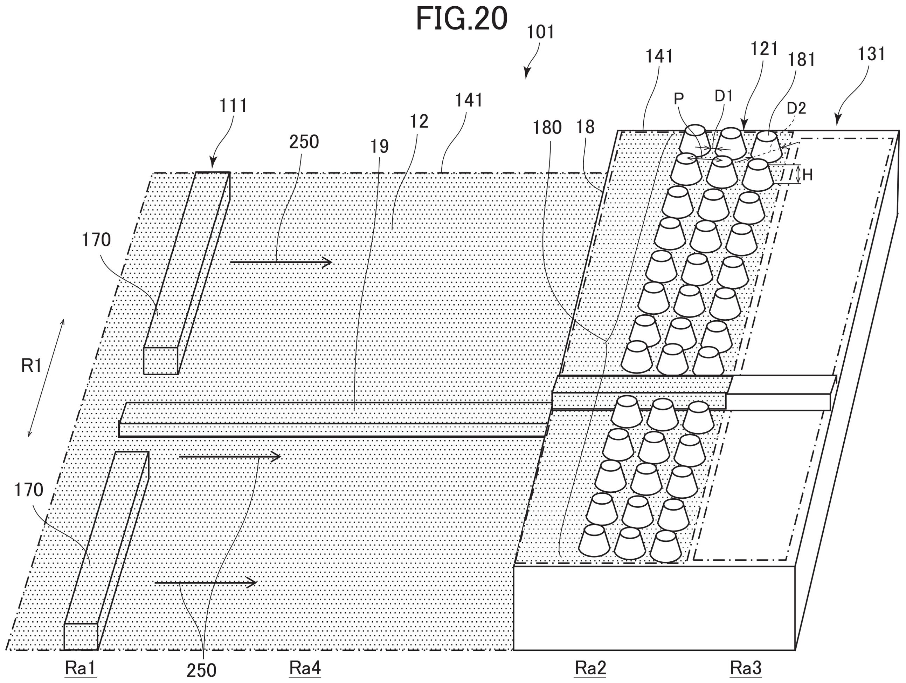

An example corresponding to the fourth embodiment will be described. FIG. 20 is a schematic perspective view of a portion of the component 1 according to the example. In the present example, the distance D1 was set to 10 µm, the pitch P was set to 60 µm, the height H was set to 20 µm, and the width D2 was set to 50 µm. The shape of each of the plurality of protrusions 181 was set to a truncated cone shape, and the plurality of protrusions 181 were arranged in a honeycomb pattern. The intermediate region 141, the concavo-convex structure region 121, and the smooth surface region 131 were provided in an outward direction (direction of arrow 250) from the sliding region 111. The components 1 and 2 were constituted by resin molded products formed from resin such as polycarbonate, and the concavo-convex structure region 121, the smooth surface region 131, and the intermediate region 141 of the component 1 were formed by injection molding. As a result of this configuration, there was no need to provide a packing or apply an oil repellent film, and leakage and spread of the lubricant 12 from the sliding region 111 of the lens barrel 230 to the outside of the lens barrel 230 could be suppressed.

### Other Modification Examples

The present disclosure is not limited to the embodiments described above, and can be modified in many ways within the technical concept of the present disclosure. In addition, the effects described in the present embodiment are merely enumeration of the most preferable effects, and are not limited to the present disclosure. In addition, two or more of the plurality of embodiments and plurality of modification examples described above may be combined.

Although a case where the unit is applied to a replacing lens unit has been described in the embodiments described above, the configuration is not limited to this, and the unit is applicable to an optical device in which a lens unit is integrated with a camera body.

In addition, although it is preferable that the unit described above is applied to an optical device, the application is not limited to an optical device, and the present disclosure is applicable to various devices including a unit in which two components movable with respect to each other slide on each other. For example, the unit described above is also applicable to a camera including a shutter mechanism, a reflex mechanism that drives a movable mirror, a shake compensation mechanism that drives a movable image sensor, or the like. In addition, the unit described above is also applicable to an office appliance such as a printer, a copier, or a scanner, medical equipment such as computed tomography (CT) or magnetic resonance imaging (MRI), industrial equipment such as a robot or a semiconductor manufacturing apparatus, transport equipment such as a car, an aircraft, or a ship, or the like. The relative movement between the two components is not limited to a rotational motion, and may be a linear motion. In addition, one of the two components may be stationary and the other of the two components may be movable, or both of the two components may be movable.

Furthermore, the contents of disclosure in the present specification include not only contents described in the present specification but also all of the items which are understandable from the present specification and the drawings accompanying the present specification. Moreover, the contents of disclosure in the present specification include a complementary set of concepts described in the present specification. Thus, if, in the present specification, there is a description indicating that, for example, "A is B", even when a description indicating that "A is not B" is omitted, the present specification can be said to disclose a description indicating that "A is not B". This is because, in a case where there is a description indicating that "A is B", taking into consideration a case where "A is not B" is a premise.

Various embodiments have been described in detail above but it will be understood that the present disclosure is not limited to these embodiments and encompasses all modifications, variants, alternatives and equivalents falling within the scope of the appended claims.

## Claims

1. A unit (100) comprising a first component (1) and a second component (2),
wherein one of the first component (1) and the second component (2) is movable with respect to the other of the first component (1) and the second component (2),
wherein a lubricant (12) is provided between the first component (1) and the second component (2),
wherein a first surface (101) of the first component (1) includes a first region (111), a second region (121), a third region (131), and a fourth region (141),
wherein the first region (111) is slidable on the second component (2) with the lubricant (12) therebetween,
wherein along the first surface (101), the second region (121) is provided between the first region (111) and the third region (131), and the fourth region (141) is provided between the first region (111) and the second region (121),
wherein the second region (121) has a concavo-convex structure (180) including a plurality of protrusions (181) and/or a plurality of recesses (182),
wherein an arithmetic mean roughness (Ra3) of the third region (131) at a sampling length of 700 µm is smaller than an arithmetic mean roughness (Ra2) of the second region (121) at a sampling length of 700 µm, and
wherein an arithmetic mean roughness (Ra4) of the fourth region (141) at a sampling length of 700 µm is smaller than the arithmetic mean roughness (Ra2) of the second region (121) and larger than an arithmetic mean roughness (Ra1) of the first region (111) at a sampling length of 700 µm.

2. The unit (100) according to claim 1, wherein the unit (100) satisfies at least one of the following:
(i) the arithmetic mean roughness (Ra4) of the fourth region (141) is 0.5 µm or more and 1.6 µm or less;
(ii) the arithmetic mean roughness (Ra3) of the third region (131) is 0.5 µm or less;
(iii) the arithmetic mean roughness (Ra2) of the second region (121) is 1.6 µm or more and 100 µm or less; and
(iv) the arithmetic mean roughness (Ra2) of the second region (121) is 3.2 µm or more and 10 µm or less.

3. The unit (100) according to claim 1 or 2, wherein a distance (D1) between the two adjacent protrusions in the plurality of protrusions (181) and/or a distance (D1) between the two adjacent recesses in the plurality of recesses (182) is 40 µm or less.

4. The unit (100) according to any one of claims 1 to 3, wherein the arithmetic mean roughness (Ra1) of the first region (111) is smaller than the arithmetic mean roughness (Ra2) of the second region (121).

5. The unit (100) according to any one of claims 1 to 4,
wherein the first surface (101) includes a protruding portion (170), and
wherein the first region (111) is provided in the protruding portion (170).

6. The unit (100) according to any one of claims 1 to 5, wherein the first surface (101) includes a step portion (18) between the first region (111) and the second region (121).

7. The unit (100) according to any one of claims 1 to 6,
wherein the first surface (101) includes a fifth region (151) and a sixth region (161),
wherein the first region (111), the second region (121), and the third region (131) are provided between the fifth region (151) and the sixth region (161) along the first surface (101), and
wherein an arithmetic mean roughness (Ra5) of the fifth region (151) at a sampling length of 700 µm and an arithmetic mean roughness (Ra6) of the sixth region (161) at a sampling length of 700 µm are each larger than the arithmetic mean roughness (Ra3) of the third region (131).

8. The unit (100) according to any one of claims 1 to 7,
wherein the first component (1) includes a second surface (102) opposite to the first surface (101),
wherein the second component (2) includes a third surface (103) and a fourth surface (104) opposite to the third surface (103),
wherein the third surface (103) opposes the first region (111), the second region (121), and the third region (131), and
wherein a portion of the first surface (101) other than the first region (111), the second region (121), and the third region (131) does not oppose the third surface (103).

9. The unit (100) according to any one of claims 1 to 8,
wherein one of the first component (1) and the second component (2) is slidable on the other of the first component (1) and the second component (2) in a rotation direction (R1) about an axis (C1), and
wherein the first surface (101) includes a streak-shaped protrusion portion (190) formed in at least the second region (121) and the third region (131) and extending in a direction (R1) of the axis (C1).

10. The unit (100) according to any one of claims 1 to 9,
wherein the plurality of protrusions (181) and/or the plurality of recesses (182) are arranged in a honeycomb pattern.

11. The unit (100) according to any one of claims 1 to 10,
wherein the plurality of protrusions (181) and/or the plurality of recesses (182) are each formed in a cylindrical shape, a conical shape, or a truncated cone shape.

12. The unit (100) according to any one of claims 1 to 11, wherein the first component (1) is a resin molded product.

13. The unit (100) according to any one of claims 1 to 12, wherein the first component (1) and the second component (2) each have a cylindrical shape.

14. The unit (100) according to claim 13, wherein one of the first component (1) and the second component (2) is rotatable in a rotation direction (R1) about an axis (C1) with respect to the other of the first component (1) and the second component (2).

15. An optical device (220) comprising:
a lens barrel (230); and
a lens (240) accommodated in the lens barrel (230),
wherein the lens barrel (230) includes the unit (100) according to any one of claims 1 to 14.
